# EUROPEAN PATENT APPLICATION

(11) **EP 0 567 038 A1**
(43) Date of publication of application: **27.10.1993**
(21) Application number: 93106310.1
(22) Date of filing: 19.04.1993
(51) Int. Cl.: F03G 7/06, H02N 10/00, G10K 15/04, G10K 11/34, F16C 32/06, G02B 26/06, G01P 5/12

(54) **Thermal urger**

(30) Priority: 20.04.1992 US 870855
(71) Applicant: ROCKWELL INTERNATIONAL CORPORATION, Seal Beach, California 90740-8250 (US)
(72) Inventor: Culp, Gordon Walter, Van Nuys, California 91401 (US)
(74) Representative: Wächtershäuser, Günter, Prof. Dr.

(57) **Abstract**

A surface having an array of cavities (8) each having an individually controlled heater (18) can be used for a variety of purposes. Sensors for detecting the positions of objects, temperatures and pressures feed information to a controller for activating heaters (18). The heaters heat a medium (14) which expands and sends pressure pulses from the cavities (8). The pressure pulses can be used to exert a force on adjacent objects (6) for making bearings, motors and deformable mirrors. The pressure pulses can be used in hydrodynamic bodies to influence fluid flows and can be controlled as a phased array pressure wave transmitting or receiving antenna.

## Description

### BACKGROUND OF THE INVENTION

### Field of the Invention

The present invention generally relates to electrofluid transducers and, in particular, to transducers that convert a multiplicity of electrical pulses to a prescribed temporal and spatial distribution of force on a fluid or on a nearby body.

### Description of the Related Art

Excluding electrostatic apparatus, the electrical resistance heater is perhaps the oldest, best understood, and most widely used electrical device made by man. Excluding superconductors, the passage of electric current is inexorably associated with the generation of heat.

Many heater embodiments capable of high temperature operation include lamps, industrial heaters and radiation sources capable of white heat, and resistance elements of rare earths and their oxides, many of which, including the electrical insulation therewith associated, operate in the range of zero to greater than 2000 K. Other heaters are made of material having electrical properties designed to limit inrush current at the onset of a current pulse to a prescribed value, usually lower than the current sufficient to damage the heater.

When a heater is immersed in fluid, the fluid at the heater surface rises to essentially the same temperature as that of the heater. Fluid thermal conductivity and diffusivity allows heat to spread into the fluid body, resulting in a thermal gradient. A steady current flowing for a relatively long time allows the thermal gradient to asymptotically approach a steady state. A transient thermal gradient results when the heater current varies with time, such as in a short pulse.

The background of the present invention entails heaters activated by relatively short and intense electrical pulses. In the context of the present invention, the combination of peak electrical current, pulse duration, and pulse frequency, has several upper bounds, a few of which are: a first bound on heater temperature sufficient to prevent repeated pulsing due to heater damage; a second bound on pulse duration, in that the thermal pulse must propagate in fluid in a manner analogous to an acoustic disturbance; and, a third bound on the maximum pulse repetition rate commensurate with minimum efficiency requirements.

The theory of statistical mechanics of gases established with certainty the microscopic behavior of a collection of atoms or molecules as the cause of the macroscopic effect measured as fluid pressure or force. Each molecule has a distinct velocity that changes after every collision, and, at various instants, has collisions with any object exposed to the gas. The average kinetic energy of molecules, and the average areal frequency density of collisions of the molecules with the exposed object, is demonstrably the cause of the macroscopic effect of gas pressure thereon. Significantly, molecules lose no energy in the process of exerting pressure on the container; the average kinetic energy does not run down with time, being dependent only on the temperature of the gas. This principle is within the scope of the background of the present invention in the sense that a macroscopic effect (force, pressure) has a related underlying microscopic cause (impulse). An (imagined) improved statistical mechanics of gases provides remote control of the direction and speed of individual, or clusters of molecules, so as to remotely control the temporal and areal distribution of force exerted on every portion of the surfaces in collisional contact with the gas.

The preponderance of known fluids expand when heated. The fluid proximate a pulsed heater expands in a pulsatile manner. An expansion pulse is generally temporally delayed and spread, relative to the waveform of the electrical pulse. An expansion pulse is also spatially spread relative to the shape of the heater element.

Ferdinand Braun, "Notiz über Thermophonie," (Wiedermann's) Annalen der Physik und Chemie 65, 358-360 (1898), describes a device known to pulsatingly expand air in the audio frequency band using an electrically heated metal foil. Despite the relative coarseness of manufacture imposed by the technology of the nineteenth century, the foil produced faint but audible speech even though an electrical heater is a rectifying transducer (positive going and negative going electric signals both produce acoustic outputs of the same polarity).

Applicant's copending application serial number 07/807,667 filed 12/16/91 a continuation-in-part of serial number 07/697,368 filed 5/9/91 entitled Walking Expansion Actuator describes walking transducers that incorporate pulsed heaters that thermally pulse fluid to roll elements that affect forceful mechanical motions suitable for positioning an object by tractive walking. Microscopic and macroscopic embodiments of the apparatus are described, the former embodiment using a combination of epitaxial deposition methods to make both heaters and rolling elements, while the latter uses arts such as material forming and wire drawing. The described apparatus employs relatively intense and short electrical pulses in order to transduce the preponderance of the energy of an electrical pulse to mechanical work before the heat diffuses and mediates the thermal gradients necessary to affect a relatively high peak pressure. The apparatus is characterized by multiple heaters, each heater having a corresponding, essentially proximately, confined fluid portion, and by the mechanical summing of multiple mechanical transducer outputs.

C. Spencer, Gas Flow Sensor Fabricated on a Chip, Electronic Products Nag., 1 Oct., 1984, p 29 describes a gas flow sensor typifying the use of very small heaters made by micromachining silicon to heat flowing gas and to measure the temperature of downstream heated gas. Steady heater currents are used.

Integrated-Circuit Broadband Infrared Sources, NASA Tech. Brief, March 1989, p 32 describes a microscopic infrared light source made by the deposition of polysilicon on a subsequently removed temporary support. The heater element is ribbon shaped and can be made with a thickness in the range of 0.5 to 1.0 µm. The maximum operating temperature is on the order of 1000 K.

George Forbes, A Thermal Telephone Transmitter, Proc. Roy. Soc. (London) 42, 141-142 (1887) describes an anemometer embodying principles used in modern versions having frequency response well into the MHz band because the mass of the wire heating element is small. Steady electric current heats the wire to a steady temperature in still air. The increment of velocity of air due to a sound pulse passing the wire carries away an increment of heat, thereby decrementing the temperature of the wire. The resistance of the wire is related to its temperature by calibration, providing an electrical means of measuring instantaneous gas velocity. The principle pertinent to the context of the present invention lies in the use of an electrothermal transducer as both a converter of electrical to mechanical work, and as a converter of gas velocity to an electrical signal.

Applicant's copending application serial number 07/794,109 entitled Multiresonant Actuator filed November 18, 1991 describes a multiresonant traveling wave motor that forcefully moves a rotor by traction at contacts between the rotor and the wave crests of a resonating stator. The stator is stimulated to resonate by attached piezoelectric elements. Resonance at a multiplicity of frequencies and amplitudes are related to a particular mechanical waveform by the Fourier Theorem, the mechanical waveform resulting in wave crest motion that produces smooth walking of tractive contacts. Smooth walking converts kinetic energy stored in the traveling waves to mechanical work in the rotor with relatively high mechanical efficiency because contact rubbing is largely avoided by the particular mechanical waveform. High electrical efficiency of the device is retained using resonant stimulation by a circuit path that offers insignificant electrical resistance necessary to electrical power dissipation. The operating temperature range of the device is limited by the Curie temperature of the attached transducer material, be it magnetic or piezoelectric. A motor of this type would have a broader temperature range if constructed of materials that do not depend on Curie temperatures.

M. Yellin, Using Membrane Mirrors in Adaptive Optics, Proceedings of the SPIE, Vol. 75 Imaging Through the Atmosphere, 97-102, 1976 describes a deformable mirror made of a thin metal (titanium) membrane separated from a planar array of electrostatic electrodes by a low pressure air layer. An electric potential applied to an electrode caused a local deformation of the membrane, thereby altering the optical figure of the mirror. A low pressure air separation provided a compromise between frequency response (best at zero pressure) and damping (best at high pressure). The compromised low pressure required a transparent enclosure over the optical side of the mirror. The membrane evinced better damping at atmospheric pressure, but electrostatic forces were insufficient to provide the desired stroke and frequency response. A more capable embodiment of this mirror would provide local, high frequency control of the pressure of the air on at least one side of the membrane.

U.S. Patent 4,876,178 Electroconductive Film System for Aircraft Windows issued Oct. 24, 1989 teaches a method of making electrical resistance heaters having very small heating element cross section dimensions using a combination of photolithography, additive material means, and subtractive material means. In the context of the scope of the present invention, an improvement of the taught methods would include the use of temporary support means subsequently removed to expose the preponderance of heater surface area.

A known diverse class of chemoelectric devices, commonly referred to as fuel cells, uses one or more catalysts to convert two or more substances into waste heat, one or more chemical by-products, and electric current, wherein the electric current is the by-product of primary interest. An improved embodiment of the common fuel cell, in the context of the present invention, replaces chemoelectric conversion with electrochemomechanical conversion.

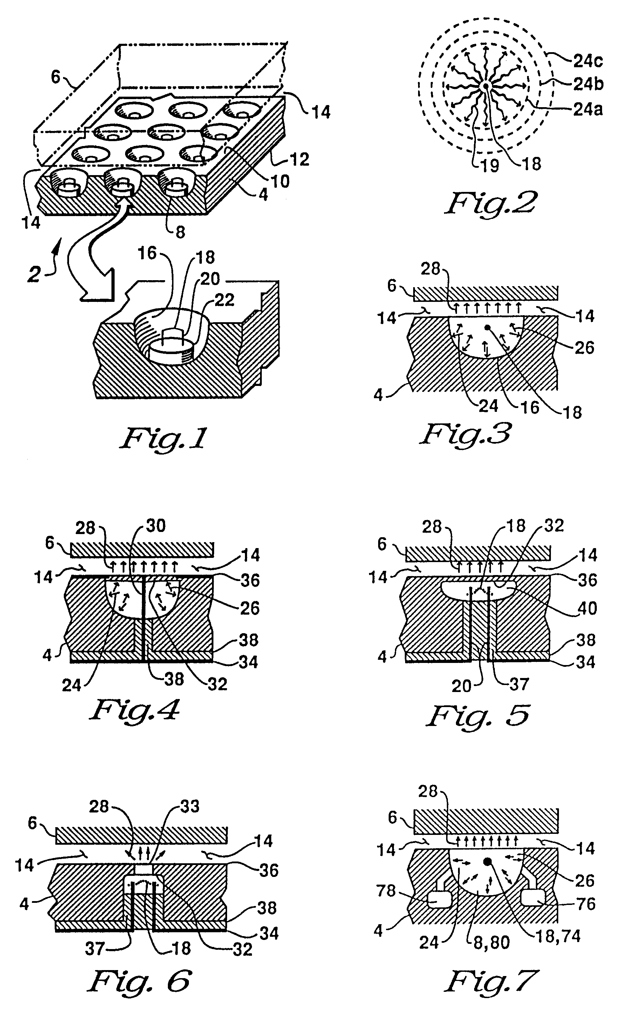

U.S. Patent Number 1,329,559 N. Tesla, Valvular Conduit, issued Feb. 3, 1920 teaches, as background of the valvular conduit invention (now commonly referred to as the fluidic diode), but does not claim, a turbine (figure 4) having a wheel 21, a nozzle 29 directed at an oblique angle to said turbine wheel, said nozzle activated by fluids expanding from a bolted-on central cavity 24 in which said fluids are ignited by ignition means 27. Ignition means 27 is described by Tesla as a sparking or hot wire plug. Continued running heats cavity 24 to a temperature sufficient to ignite freshly ingested fluid without further need of the ignition means (self sustaining ignition means). The addition of several chambers is taught as means of increasing output of the device. The described turbine wheel (from an earlier invention) consists of fluid interaction with broad surfaces of parallel flat plates rather than the more conventional buckets. The electrical power contributed by sparks or hot wire is not specified and inferred to be negligibly small and sufficient only to initiate ignition. Methods of making the described apparatus include bolted assembly of (implied by figure 4) castings or machinings.
Compared to the teachings of Tesla, the invention to be described in the Detailed Description differs in the following particulars:
a. fluid flow through is not required in embodiments excluding those augmented by chemical reaction;
b. hot wires are pulsatingly activated;
c. valves of any kind, including valvular conduits, are not used;
d. a great many more than a few heaters are used;
e. electrical power is a significant contributor to the output of power of all embodiments;
f. heater activation is essential to the initiation of each activation (self sustaining activation is not used);
g. methods of making embodiments are epitaxial and use very small component dimensions.
h. smooth or microscopically pocked surfaces proximate heaters are used.

A typical hydrostatic and hydrodynamic bearing generally has a rigid cylinder rotating in a closely fitted cylindrical hole, the fitting space being filled with liquid or gas lubricant. The ideal hydrodynamic bearing never allows interpenetration of the fluid by the bearing parts, thereby providing a long life limited only by fluid erosion of the bearing surface, and ultimate collapse of the fluid itself. High speed machinery, typified by the turbine wheels used to compress and transport propellants in modern rocket motors, benefits from the load capacity and structural stiffness of the fluid bearing, these generally being higher than those of rolling element bearings. However, chaotic propellant flow effects statistically conspire to produce, at some unpredictable future time, a sum fluid and mechanical perturbation that exceeds the strength of the bearing lubricant, or of the apparatus as a whole.

Like most chaotic processes, a catastrophic event is typically initiated by a relatively insignificant occurrence, a trope being the event (pebble) that precipitates a rock slide. Since the turbine wheel "floats" in the hydrodynamic bearing, its only coupling with the remainder of the apparatus, other than through the propellant itself, is through the bearing lubricant. Intentional modification of the propellant is of little benefit because it already hosts and nurtures relatively mature chaotic events. In contrast, many a chaotic event initiator (pebble) may be discovered in the fluid of the hydrodynamic bearing. Therefore, a useful ideal hydrodynamic or hydrostatic bearing provides a means of actively seining out each chaotic initiator (pebble) before it grows to catastrophic proportions.

Known methods of ameliorating the drag inducing, lift degrading effects of premature boundary layer separation from an aerodynamic surface (aerosurface) such as an aircraft wing include, but are certainly not exhaustibly named, spoiler tabs, extrusion of pressurized fluid from aerosurface pores, conforming flexible aerosurfaces, agitated surfaces and the like. Each of these methods has a unique set of advantages and drawbacks. By way of example, the effused fluid pore method entails a reservoir, controls, at least one pump, and connecting plumbing. The weight of the ancillary drag reduction equipment is comparable to the weight of fuel saved through drag reduction. However, the comparison is insufficiently favorable for the method to have enjoyed widespread adoption.

A boundary layer, when flow is changed from laminar to turbulent, can be made to separate further downstream than would otherwise obtain when laminar flow prevailed in most of the area of the aerosurface just upstream of the nominal (laminar) separation. Boundary layer separation is also a chaotic event, the separation of each fluid portion being traceable to a generally unpredictable, undetectable minor occurrence, such as a microscopic roughness of the aerosurface, or merely the statistically improbable sum of fluid dynamic actions, each action taken alone being far from capable of perturbing orderly flow. A means of precluding major chaotic events produces a succession of minor events, each minor event being chaotic in nature, but less violent than the major event from which energy is usurped by the minor event. The ideal amelioration means is analogous to precipitating frequent but insignificant quakes by periodically perturbing a fault, thereby piecewise releasing an otherwise devastating quantity of stored energy. For an aerosurface, one ideal perturber is a means of sewing the seeds of chaos in a controlled manner, using an apparatus that adds negligible weight, and uses little activating power.

### SUMMARY OF THE INVENTION

The present invention, called a therger (thermal urger) comprises a multiplicity of small heaters arranged on a substrate surface proximate a fluid. An electrical heater pulse causes a short transitory thermal expansion pressure pulse in the immersing fluid. The pressure pulse propagates in and applies a transitory force to the fluid and to any co-immersed object. Pressure pulses have a character between that of a flowing fluid and an acoustic impulse. Cluster activation of heaters produces a prescribed temporal-spatial distribution of fluid pressure. Aperiodic activation of therger elements emulates a fluid force due to statistical gas molecule collisions. Embodiments of the present invention constitute electrically controllable fluid bearings, linear or rotary actuators and motors, acoustic transmitters and receivers, and modifiers of fluid boundary flow.

Preferred methods of making thergers include, but are not limited to, epitaxial deposition, and photolithography with additive and subtractive material transfer, both of which use subsequently removed temporary heater element support means. Variants having catalytic coatings and exobaric fluids responsive to a combination of heater radiation and chemical reaction constitute embodiments that resemble a fuel cell except that electrochemical energy is converted directly to useful mechanical work.

### OBJECTS OF THE INVENTION

The primary object of the therger is the controlled conversion of electrical energy to useful mechanical work by thermal expansion of a fluid by a multiplicity of electrically activated small heaters.

A secondary object of the present invention is to produce useful mechanical work by expanding a first fluid proximate each of a multiplicity of small heaters fluidly isolated from a second fluid that positions an object.

Another object of the present invention is the augmentation of mechanical work done on an object by focusing the effects of fluid expansion.

A further object is heating fluid with an electrically resistive diaphragm.

An additional object is performing useful mechanical work by heating a first fluid behind a thin membrane that presents a smooth flow surface to a second fluid.

Objects of the present invention further entail the use of thergers for the construction of a variety of useful devices such as bidirectional coaxial rotary motors, bidirectional coaxial rotary stepping motors, bidirectional hypocycloidal motors, bidirectional multiresonant smooth walking traveling wave motors, electrically controlled fluid bearings, deicers for aerosurfaces, deformable membrane optics, and aerosurfaces with controlled fluid boundary layers, particularly including variants of these devices that operate satisfactorily throughout the temperature range of near zero to 2000 K.

Objects of presently preferred inventive embodiments also include methods of sensing operating states to provide better electrical control by an activating means.

An additional object of the present invention is the direct conversion of electrochemical energy into useful mechanical work.

A further object is the making of therger elements using epitaxial material transfer and temporary heater element support means.

An additional further object is the making of therger elements using photolithography with additive and subtractive material transfer means.

Yet another object of the invention is to exobarically direct fluid at an oblique angle to a fluid body or to the surface of a positionable item immersed in such fluid.
Further objects include forceful positioning of immersed items in two or more independently simultaneously electrically controlled directions.

Other objects, advantages and novel features of the present invention will become apparent from the following detailed description of the invention when considered in conjunction with the accompanying drawings.

### BRIEF DESCRIPTION OF THE DRAWINGS

FIGURE 1 is a perspective view of a portion of one embodiment of the therger (thermal urger) collection of heaters.
FIGURE 2 schematically illustrates the conversion of electric pulses to fluid expansion pressure pulses.
FIGURE 3 is a cross section of a heater of figure 1, illustrating how a fluid pressure pulse is generated.
FIGURE 4 is the cross section of a variant of the present invention having a diaphragm heater.
FIGURE 5 is a cross section of a variant having an indirectly heated diaphragm.
FIGURE 6 is a cross section of a variant of figure 3 that concentrates a fluid pressure pulse.
FIGURE 7 is a cross section view of a fuel-cell-like embodiment of the apparatus of figure 3.
FIGURE 8 is a portion cross section of a rotary and rotary-stepper motor variant of the present invention and enlarged details of a turbine-like embodiment having biaxial microscopic buckets and at least four groups of tangential nozzles of unique direction.
FIGURE 9 is a perspective cutaway view of an hypocycloidal motor variant of the present invention.
FIGURE 10 is a partially cut away face view of the device of figure 9.
FIGURE 11 is a partially cut away perspective of a multi resonant traveling wave motor variant of the present invention.
FIGURE 12 perspectively shows a rotary bearing embodiment of the present invention.
FIGURE 13 is a perspective view with enlarged detail of a fluid flow boundary control and deicing embodiment of the present invention.

### DETAILED DESCRIPTION OF THE INVENTION

Figure 1 is a perspective portion view of a therger 2 (thermal urger), comprising substrate 4, receptive object 6, and fluid 14 therebetween. Substrate 4 has an active surface 10 incorporating a multiplicity of heater assemblies 8, and an opposite supported surface 12. The enlarged portion of the figure further illustrates a representative heater assembly 8 consisting of, in supported order from substrate 4: heater cavity 16; electrically insulating base 22; heater support means 20; and, heater 18. In all figures the size of heaters and fluid bodies are exaggerated for clarity.

Supports 20 connect heaters 18 to pulsed current sources (omitted for clarity). Fluid in cavity 16 is contiguous with fluid 14. A current pulse in heater 18 suddenly raises the temperature of the heater, thereby heating fluid proximate thereto. The proximate fluid expands with sufficient rapidity that a pressure pulse propagates from the vicinity of the heater into the fluid body. The pressure pulse is generated quickly enough such that significant pressure differential, relative to the ambient pressure of the fluid body, is created before the heat in the heater body and in the proximate fluid diffuses away into the fluid body, into substrate 4, and into receptive object 6. The pressure pulse propagates away from surface 10 and toward the proximate surface of receptive object 6. Upon reflection of the pressure pulse by receptive object 6, a local portion of the surface of said object is subjected to a local increase in pressure that is significantly greater than the prevailing pressure in fluid layer 14. After a current pulse, the heater and the immediate surrounding material are allowed to approach thermal equilibrium in preparation for another current pulse.

Analogous to the statistical mechanics of gases, applying current pulses to a multiplicity of heaters 18 in a predetermined sequence creates a pressure or force on object 6 that, given enough heaters pulsed with sufficient frequency, approximates the pressurizing effect of the gas itself. The pressure pulse is analogous to a molecular collision. The force exerted by a gas, however, can only be changed by changing the temperature of the gas, and the pressure in a constant-volume container is essentially constant at every surface portion of the container. Further, very small heaters in combination with very short pulses, produces the pressure increment over and above the ambient fluid pressure with relatively great efficiency. One measure of the efficiency is the excess pressure increment per unit of electrical power consumed. The ideal heater generates a pulse that is a delta function of pressure, a function that produces a pulse of finite absolute pressure during a vanishingly small increment of time. If the heaters were ideal in this sense, they would add negligible heat to the apparatus as a whole (added heat also raises the ambient pressure if fluid volume is held constant), but do produce pressure pulses. The pressure increase exerted by the collective effects of the pressure pulses on object 6 will nevertheless be measurably greater than the ambient pressure in fluid layer 14.

The ideal heater has no latent heat, and would in principle cool immediately after the cessation of electric current. However, when the thermal mass of the heater is slight, the finite latent heat of the proximate fluid portion dominates the thermal response of the system. The ideal fluid has thermal conductivity, thermal diffusivity, and thermal expansion properties balanced to give the largest possible change in pressure with the least possible quantity of input power, while at the same time allowing rapid return to near-thermal equilibrium in preparation for another current pulse. The preferred balance is determined by the apparatus appropriate to a particular application.

A real heater, including those within the scope of the present invention, becomes more efficient as size decreases. Reduction of heater size to the scale easily attained by micromachining methods results inefficiencies approaching the ideal.

Heater 18 is illustrated as a wire as a familiar example, but may take other forms including but not limited to ribbon, coiled wire, coiled-coil wire, thin film, thick film, cemented particles, and linearly fused grains.

Figure 2 is a schematic diagram of an end view of a heater, for example wire 18, at an instant after the execution of three current pulses. The first current pulse has propagated pressure pulse 24c (broken circle) then pulse 24b, and pulse 24a. Arrows 19 schematically illustrate the direction of heat flow from wire 18, while the thickness of the arrow tails is meant to represent the diminishing temperature and pressure with distance from wire 18. Pressure pulse 24c propagates with a substantial fraction of the energy imparted by the causative current pulse, but is no longer associated with the preponderance of the heat associated with the pulse at the initiating instant. The distance between successive pressure pulses is compressed in the figure for clarity.

In addition to the expansion by heating of gas proximate the heater, a diverse class of fluids and heater materials advantageously add the energetically beneficial effects of a change of state. Combinations of fluids and heater materials that favor adsorption of fluid on and in the surface of the heater increase efficiency. Gaseous or liquid fluid vastly increases in density approaching that of the solid state during adsorption. Adsorbed fluid has very intimate thermal contact with the heater material and depends only partly on the fluid's bulk thermal conductivity to accept heat. At the onset of a current pulse, adsorbed fluid heats essentially at the same rate as the heater body. Fast heating, combined with the advantageously large change in volume from the near solid density to the gas phase, results in intense and well defined pressure pulses at the expense of relatively little electrical energy.

Heaters made microporous, or coated with a thin layer of microporous material adsorb a greater quantity of fluid than ordinary materials. Microporous is herein defined as material having pores or tunnels that are only slightly larger than the molecules of the adsorbed fluid, thereby reducing the free energy of a molecule that is thus adsorbed. Optimum adsorption is limited to a relatively narrow temperature range. At the high end of the range less fluid is adsorbed, but desorption is generally faster. At the lower end of the temperature range, greater quantities of electrical power are required to desorb the fluid.

Liquids surrounding, and solids condensed on, the surface of the heater further augment pressure pulses, both through more intimate thermal contact, and by dint of the advantageous volume change evinced by most condensable material when it is vaporized or sublimed directly to the gas state.

Figure 3 is a cross section of a therger variant having a wire-like heater 18 (end view) suspended in cavity 16 of substrate 4 (wire supports omitted for clarity). Cavity 16 may be a pit as shown in figure 1. Alternative embodiments may have cavities in the form of long grooves, the wire optionally having periodic supports. The figure represents the immediate consequences of a current pulse in wire 18, the propagation of a pressure pulse 24 in the portion of fluid in cavity 8 that is also contiguous with fluid 14, reflection of the pressure pulse by cavity wall 16, and redirection of the pressure pulse 26 toward receptive object 6. A local increment of pressure 28 results from the reflection of the pressure pulse from the surface of object 6. The propagation of the pressure pulse more closely resembles an acoustic phenomenon than the fluid responses associated with an internal combustion engine. The internal combustion engine relies on essentially complete confinement of the gas that is heated and expanding to produce mechanical work. In contrast, the more acoustic nature of the therger pressure pulse relies only in part on fluid confinement. The degree of confinement, taken from essentially none, to complete confinement, increases operating efficiency by only a moderate amount.

Figure 4 is a cross section of a therger variant incorporating a membrane heater 32 that partially or completely separates the cavity fluid from the ambient fluid 14. The membrane, for example, is a circular disk affixed at its edge to substrate 4 by way of electrical connection layer 36. The center of the disk is connected by lead 30 to an electrical bus 34. Bus 34 and lead 30 are electrically insulated from substrate 4 by insulators 38. Disk thickness tapers radially from thicker at the center to provide more uniform current density, and therefore more uniform heating, of the disk area.

A current pulse in the membrane propagates pressure pulse 24 toward the cavity, and pulse 26 through the membrane toward object 6. Pulse 24 is reflected by the cavity and adds to the pressure sum 28 borne by object 6. Fluid 14 is also heated by the membrane and contributes to local pressure increment 28 on object 6 in proportion with the thickness and thermal properties of fluid 14. This embodiment presents a smooth surface to fluid 14, thereby offering only controlled aerodynamic perturbations when a combination of fluid 14 and object 6 are moving parallel to the membrane surface.

Figure 5 is a cross section of a therger variant having diaphragm 32 that can separate two fluids 14, 40, and is indirectly activated by heater 18. Heater 18 is connected to the source (omitted) of current pulses by leads 20 and electrical buses 34, all of which are electrically insulated by layers 37, 38. The local pressure 28 on object 6 comprises a combination of a thermal pressure pulse from diaphragm 32, motional coupling of diaphragm 32 through fluid 14, and acoustic coupling through fluid 14 of diaphragm motion due to pressure pulses of fluid 40. This embodiment allows surface 36 of substrate 4 to be made of an uninterrupted layer of material, a benefit to manufacturing class of thergers. The uninterrupted layer may be integrally fabricated with substrate 4, affixed to substrate 4 as a separate component, or deposited epitaxially over a subsequently removed temporary support means. An unbroken layer offers a minimally perturbing aerodynamic surface, and simplifies fluid confinement within and fluid exclusion from without, an advantage in chemically and thermally aggressive environments.

Figure 6 is a variant of the apparatus of figure 5 having an orificial diaphragm 32 that concentrates the effect of a pressure pulse. The volume of pulse fluid confined by heater support insulator 37 is reduced to augment the peak pulse pressure. Reduced pulsed fluid volume, combined with reduced area of orifice 33, increases the kinetic energy of the fluid participating in the pressure pulse, thereby increasing the intensity of impulse 28 impinging object 6. Therefore, invoking the analogy of statical gas mechanics, it is the kinetic energies of the plethora of collisions that raises the measured pressure.

FIG. 7 is a cross section of a therger element comprising, in addition to the components of figure 3, any combination of: catalytic coating 74 of heater element 18; catalytic coating 80 of cavity 8; a first fluid inlet 76; and, a second fluid inlet 78. The embodiment using all of these additional components converts two or more fluids from ports 76, 78 to exobaric energy by the combined action of the heat of heater 18, the enhanced activation of catalyst 74 by said heat, the enhanced activation of catalyst 80 by the light radiated by the heater, the action of the catalysts on first and second fluids as a mixture in cavity 8, the chemoelectric conversion of the mixture to heat, a third and successive chemical by-products, and a pressure pulse that is converted to useful mechanical work on the preponderant immersing fluid, or on an object coimmersed therein. For example, the first fluid may be hydrocarbons such as methane or a mixture of carbon-bearing gases, and the second fluid may consist of one or more oxidizers such as oxygen, that upon mixing and being activated by the catalyst, "crack" to form hydrogen that reacts with the oxidizer to form exobaric by-products that may include steam.

A fluidly closed variant uses a single fluid that reversibly produces exobaric pulses responsive to heater temperature. By way of example, a polyatomic molecule may be temporarily dissociated by the concerted action of heater heat, heater light (primarily infrared), and catalysts. The exobaric dissociation produces the desired pressure pulse, while the catalyst or catalysts, over a relatively greater time span and at a lower temperature, favors recombination of the dissociated constituents into the parent fluid, thereby allowing fluidly closed operation.

Practice of this embodiment of the present invention includes sizing fluid ingress ducts 76, 78, and control of the flow of admitted fluids, in a manner prescribed to restrict chemoelectric reaction to the immediate vicinity of the catalytic surfaces as a minimum, and to the immediate vicinity of cavity 8 as a maximum, as chemoexobaric excitation elsewhere contributes less to the intended localized conversion of chemoelectric energy to desired mechanical work.

Clearly, the energy density available from chemoelectric exobaric conversion exceeds the energy density produced by solely temporarily raising the temperature of a fluid. In fluidly open embodiments of the present invention, the entropic and chaotic manner of operation provides the time needed between exobaric pulses for the replenishment off reactive fluids and the expulsion of fluid reaction products. Also clear will be the advantageously smaller volume occupied by water or other liquid condensation by-products that contributes to the extremes of pressure thus generated, particularly when the apparatus is operated in a predetermined average temperature range the favors condensation.

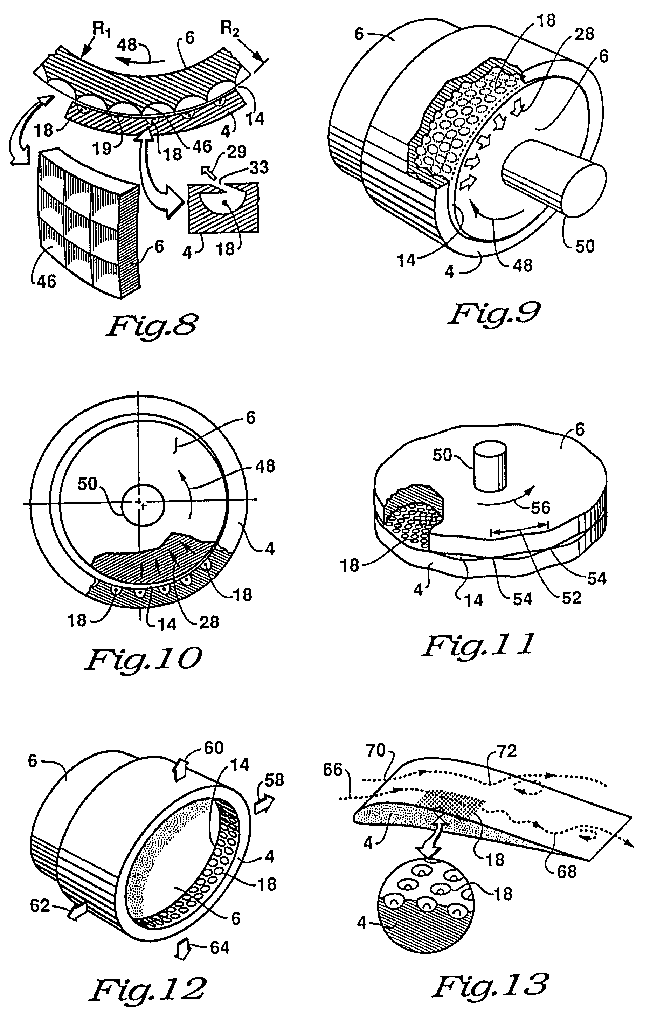

Figure 8 is a partial cross section of a rotary actuator (motor) embodiment of the therger comprising rotor 6 and therger stator 4. Rotor 6 and stator 4 are figures of revolution with respective radii R₁ and R₂ about a common axis. The cylindrical surface of rotor 6 includes a multiplicity of cavities, each cavity having at least one facet 46 angled with respect to a corresponding local radius. The inner surface of stator 4 includes a multiplicity of heaters 18, only a few of which are shown in the figure, namely, those that, at an instant of time, lie near corresponding facets 46. Current pulses in heaters, for example, heaters 18, as shown in figures 1 and 3, propagate pressure pulses toward facets 46 that, upon reflection, apply impulsive energy that urges rotor 6 to rotate in direction 48. Not shown in the figure for clarity is a rotor position sensor and a heater control means that, acting in concert, determine when to pulse heater clusters for the most advantageous rotor torque. An adjustment of the heater pulse timing such that pressure pulses impinge on the facet opposite facet 46 causes rotor 6 to rotate in the direction opposite that indicated by arrow 48. - Alternate activation of pulses on facets 46 and facets opposite facets 46 provide stepper motor action.

The motor depicted in figure 8 is also to be regarded as a linear motor by assigning infinite values to radii R₁ and R₂.

In an alternative embodiment of figure 8 the surface of rotor 6 includes a multiplicity of indentations 46 that serve as reaction buckets similar to the buckets of a turbine (see enlarged portion), each bucket having facets or side walls angled with respect to the surface of the envelope of the rotor. The inner surface of stator 4 includes a multiplicity of heaters 18, 19, only a few of which are shown in the figure. A current pulse, for example, in heater 18 (enlarge portion), by dint of angled nozzle 33, propagates an exobaric pulse in direction 29 toward the sidewall of a proximate rotor bucket, interacts with the bucket, and thereby urges rotor 6 in rotation direction 48. While it is intended that conversion of exobarically nozzle-directed electrical energy is converted to beneficial mechanical work by dint of tangential fluid urging of a smooth urged surface, and that such inventive embodiments are herein included, the alteration of the direction of exobaric momentum by buckets augments the tangential force, and thereby increases the conversion efficiency compared to the smooth urged surface.

Other heaters, such as heater 19, direct fluid pulses in the opposite tangential direction as that of heater 18, and thereby urge, when separately activated, rotor 6 in the direction opposite to that of arrow 48. Not shown in the figure is a set of nozzles that are directed normal and antinormal to the figure plane, that, when activated, exert on rotor 6 corresponding axial forces, these being used, in combination with essentially symmetric buckets 46, to urge rotor 6 in any combination of rotary and axial directions. Therger embodiments that urge in more than one tangential direction are called biaxial thergers, and alternatively, multiaxial thergers.

Motivated bearing embodiments of the therger use a fluid film 14 between rotor 6 and stator 4. The temporal and spatial distribution of pressure in film 14 is electrically controlled by activation of a predetermined subset of heaters of the therger surface. Variants of the motivated bearing further include at least one fluid inlet similar to inlet 76 of figure 7. Embodiments that restrict tangential fluid flow through film 14 have conterminous bucket boundaries in the urged rotor surface plane. Bucket geometries other than rectilinear (illustrated), such as close-packed triangles, hexagons and the like, are included in the preferred embodiments of the present invention.

For spherical embodiments of rotor 6 and stator 4, groups of heaters and nozzles provide independent simultaneous electrical control of the rotation force and speed of each of the three orthogonal rotary components in accordance with the selection of sequences of activation and intensity of activation of groups of heaters. By way of example, an apparatus providing the simulation of inertial forces encountered by and during the flight of a guided missile consists of a spherical embodiment of the present invention in which the missile is suspended, then levitated and accelerated about three independently electrically controllable axes of rotation by therger action.

Cylindrical embodiments provide independent simultaneous control of any combination of rotations about the cylindrical axis, and translations parallel to the cylindrical axis. A motor embodiment is made from components similar to those illustrated in figure 9, wherein rotor 6 rotates about the axis of stator 4, stator 4 has a therger inner surface with one or more nozzle groups directing exobaric pulses in one or more predetermined directions at a bucketed rotor surface.

Planar embodiments, having components similar to those shown in figure 10, motivate a plane surface, for example, the proximate plane of a movable object 6 suitably provided with buckets as described. Object 6 may be the stage of a microscope or an integrated circuit mask alignment stage. The therger plane, for example, therger surface 18 (figure 11) contains one or more nozzle groups directing exobaric pulses in one or more predetermined directions at the bucketed stator surface.

It is to be understood that the dimensions of rotor and stator components are smaller than illustrated, that the numbers of buckets and nozzles are very large, and that the preferred embodiments need not have buckets spatially correlated with nozzles. Further, locations of buckets may be random or chaotic, as may be the locations of nozzles, as determined while stationary and at a prescribed time instant during motional activation. It will be clear that at any instant of operation the - force derived from an activated nozzle that is located other than in a more advantageous forcing position relative to one (or more, overlapping) buckets will produce a force that is relatively ineffectual compared with the force of a more advantageously aligned nozzle. This is because the shape of the buckets and the angles of nozzle discharges disadvantageously aligned relative thereto precludes the generation of greater than insignificant force acting counter to the expected force from a group of nozzles, as a whole, of which group the misaligned nozzles are members. Therefore, activation of misaligned nozzles of a group of nozzles will not significantly interfere with the urging, as a group, of the rotor or other urgeable object. The advantage of this condition is therger apparatus that is physically and operationally simpler than alternate embodiments (also herein included) that activate heaters only upon detection of advantageous nozzle alignment by ancillary detection means. Clearly, activation of misaligned nozzles relegates a portion of the available electrical power to total system entropy without benefit of significant conversion to useful mechanical work, compared to heaters activated only when most advantageously aligned. However, in many applications, the concomitant reduction in operating efficiency is less important than structural and operational simplicity.

The motor of figure 8 requires a means of rotatably supporting rotors 6 with appropriate clearances to the heater surface of stator 4. Bearings are known to have shorter lives at very high temperatures. Variants of rotor support means appropriate to high temperature operation will be readily apparent to one versed in the particular arts, including hypocycloidal, epicyclic, gyratory, and related rolling means that do not require bearings in the conventional rolling element sense.

Figure 9 is a perspective cut away view of an hypocycloidal motor having a cylindrical rotor 6 that rolls on the inner therger surface of stator 4. The cut away portion reveals the locations of some therger heaters (dotted circles) proximate the cylindrical surface of rotor 6.

Figure 10 is a face view of the motor of figure 9 cut away to show, at the instant following the pulsing of a heater cluster, forces 28 imparted to rotor 6 that urge rotor 6 to hypocycloidally roll inside stator 4 in a direction 48 (opposite that of direction 48 shown in figure 9). Hypocycloidal rolling rotates shaft 50 of rotor 6 in direction 48. Each heater cluster is pulsed just after the line of contact between rotor and stator passes, at which time fluid 14 is thinnest and is expanding. An alternate arrangement holds cylinder 6 stationary while tube 4 hypercycloidally revolves. A variant of the device allows hypocycloidal counter-rotation of parts which, given appropriate angular inertial moments, largely cancel the vibratory effects of rotating off-centered masses. A sequence of activation of heater clusters acting on the location of the greatest mechanical advantage for forward rotation accelerates the rotor to a desired velocity. A similar sequence of activations, acting on the location of the greatest mechanical advantage for backward rotation, decelerates the rotor. The use of this pair of sequences provides stepping motor action in combination with the smoothly adjustable step length afforded by therger action.

Figure 11 shows a thurger configured as a multi resonant traveling wave motor comprising stator 4 and rotor 6 in the form of disks of elastic material. The upper surface of stator 4 holds heaters 18, a few of which are exposed to view by the cutaway. Between rotor 6 and stator 4 is fluid film 14 that is thermally and acoustically coupled to heaters 18. Cluster-wise activation of heaters 18 creates a predetermined temporal and spatial pressures distribution that excites waves of fundamental length 52 in disks 4, 6. The waves travel in a circular direction opposite to that shown by arrow 56. Traction at wave crest contacts, for example, contacts 54, cause rotor 6 to rotate output shaft 50 in direction 56. In an alternate embodiment the wave crests do not touch the opposite surface, however the forces of the surface waves on the fluid 14 act on and move the opposing surface, thus avoiding frictional contact. Mechanical efficiency of the motor improves when subclusters of heaters are activated at multiples of the fundamental frequency (52) in order to excite higher harmonic vibratory modes in the disks. In variants of the device that activate each heater with the same electrical pulse, the area (number of heaters) of a subcluster and the corresponding harmonic are determined by the Fourier Theorem in accordance with the desired shape of the waves traveling in rotor 6 and stator 4. An advantageous traveling wave shape is that shape which causes the least rubbing at contacts 54, and therefore most improves the mechanical efficiency of the motor. When all contact rubbing is eliminated, the mechanical efficiency of the motor is not denigrated by relegating a portion of the applied electrical energy to the generation of contact frictional heat. An alternative variant of the motor of figure 10 holds disk 6 nonrotating while disk 4 rotates. An additional variant holds disk 4 nonrotating while disk 6 rotates. Variants also include those in which any combination of disk 4 and disk 6 are traveling wave oscillators.

The preferred arrangement of heaters on disk 4 is essentially equally spaced along the arms of involute spirals emanating from a base circle concentric with the edge of disk 4 and interior to the heater area. This arrangement provides approximately uniform density of current and pressure in the therger plane. One embodiment has at least half of the electrical buses following the spiral arms, while the other half lie in concentric circles. An alternative embodiment has one set of involute buses spiral in one direction while the other involute set spirals in the opposite direction, each cross point connecting one or a cluster of heaters. The involute pattern may be considered a cross bar rectangular grid that is twisted about the disk axis.

Figure 12 is a perspective view of a fluid therger bearing comprising a shaft 6 and a liner 4. The figure shows shaft 6 retracted slightly to reveal some of the heaters 18 in the inner surface of liner 4. Liner 4 is separated from shaft 6 by a film of fluid 14. A preferred embodiment supports liner 4 without rotation, while shaft 6 rotates freely on fluid film 14, thereby avoiding twisting of, or sliding of electrical heater connections. Electrical heater connections, a current source, and a controller are omitted from the figure for clarity. A conventional fluid bearing provides a combination of static and dynamic (motionally generated) fluid forces that maintain shaft-liner concentricity, a state concomitant with uniform fluid film thickness and therefore minimum potential energy content. The controller activates predetermined heater clusters at prescribed time intervals to augment the motional or hydrostatic shaft suspension forces with therger transitory forces, for example, a combination of forces 58, 60, 62, or 64 acting on shaft 6. The augmentation of bearing fluid pressure advantageously aids in maintaining shaft 6 centered in liner 4.

Activation of heater clusters in another sequence causes a combination of shaft augmentation forces 58 - 64 to decenter shaft 6 in a manner predetermined to correct a temporary or secular unbalanced rotary condition of the shaft as detected by a position sensor. For example, stresses in a high speed turbine wheel that offset the apparent center of mass about which the entire wheel rotates, are relieved in part by allowing the wheel shaft to rotate about the offset center instead of about the geometric center. The true (offset) mass center usually rotates with the shaft. Therefore, activation of heater clusters in a sequence predicated on the relocated rotation center will reduce rotating stress, within the limits bounded by the fluid film thickness.

Activation of heater clusters also affects damping of machine components the fluid bearings of which are subject to severe and potentially damaging vibration or shocks. Signals from one or more vibration sensors are used to initiate heater activation In a pattern that actively cancels, or at least ameliorates, the vibrations and shocks. A subset of generally random vibrations are chaotic initiators. Activation of heater clusters in yet another manner, namely, a pattern dictated by chaotic perturbations sensed in the (usually high speed) rotating component, results in essentially canceled perturbations, a requisite to stemming the growth of chaotic precursors to catastrophic proportions.

To deal with the subclass of chaotic initiators that are difficult to detect, activation of heater clusters in a predetermined pseudorandom sequence will usurp portions of the energy available to otherwise uncontrolled fed-forward chaotic growth, thereby reducing the likelihood of catastrophe. Cancellation includes those events that are small, statistically rare, high in spatial and temporal frequency, and rendered relatively easy to detect by prior acoustical characterization of the rotating components and hardware adjunct thereto.

Figure 13 is a perspective portion of an aerosurface 4 (hydrosurface), typically, the wing of an aircraft or the control surface of a seagoing vessel, that derives lift by the elongation of flow lines 66, 70, over one surface relative to the flowlines of an opposite surface. The top surface, for illustrative purposes, includes a portion having therger heaters 18, also shown enlarged in the circle. - The airfoil is passing from right to left through fluid in the figure. The path of a representative fluid particle 66, broken line, passes over the leading edge with laminar flow. The particle then traces a more turbulent path as it passes over and is perturbed by therger 18, and continues along the upper surface with mixed laminar and turbulent flows until separation point 68. Upon separation from the boundary layer some of the fluid may become fully separated and recirculating, the degree of recirculation depending on aerodynamic conditions, the shape of the airfoil, and the angle of attack.

The path of another fluid particle 70 remains laminar until point 72, at which full and energetic boundary separation occurs. Being closer to the position of least pressure and greatest velocity relative to the boundary layer, the energy available to chaotic feed-forward just downstream of separation point 72 is considerably greater than that occurring downstream of point 68. Therefore, perturbation of the fluid in and proximate the boundary layer by therger 18, although it roughens the flow closer to the leading edge, results in less energy being relegated to loss of lift and to increased drag.

Heaters like those shown in Figs. 4, 5, are appropriate for aerodynamic (hydrodynamic) bodies that benefit from very smooth skins, such as Reichardt torpedoes, hydrofoils and the like, wherein an objective is to retain laminar flow and to delay boundary separation insofar as possible, preferably to the trailing edge, downstream of which turbulence contributes little to drag and to loss of lift. Open heaters such as those of Figs. 1, 3 and 6 are appropriate in application that benefit from relatively energetic fluid perturbation. Thergers in the combustion chamber, throat, and nozzle of a rocket engine may be activated in sequences that cancel chaotic precursors, or dissipate cumulative feed-forward energy. Thergers made of selected materials have a tolerance to high temperatures associated with a diverse class of rocket motors. Therger cluster firings also ameliorate known aeroacoustic instabilities that sporadically emerge and are difficult to control inside rocket engines.

Aerosurfaces (hydrosurfaces) having leading edge portions covered by therger heater arrays constitute electrically deiced surfaces. Repeated activation of heater clusters in traveling waves appropriate to the stimulation of resonant vibrations of a clinging ice sheet will excite the sheet to amplitudes conducive to tension failure. The high frequency response, in combination with frequency seeker-scanner operation of the heater array controller, allows excitation of the higher, usually transverse, vibratory modes of ice sheets, thereby causing relatively rapid disintegration. Unlike the magnetic repulsion of currents in parallel wires, the currents in a therger deicer are relatively small. Air, confined behind diaphragms, or occluded in heater cavities by ice, provide a significantly greater force per unit of applied peak electric current than the magnetic repulsion deicer. It is emphasized that it is not the heat of the therger that frees ice from the aerosurface, but it is therger excitation of high frequency resonances in ice and adjunct structure that affects deicing.

Consider each therger heater as a point source of acoustic pressure waves that are known, when the source is point-like, to propagate as spherical waves. The Huygens-Fresnel Principle of optics provides a method of constructing a wavefront of predetermined shape that is the envelope of summed contributions from a multiplicity of spherical wavefronts, each spherical wavefront emanating from a point source that is in actuality one of a multiplicity of finite surface elements of the propagator. Therefore, the therger plane produces an acoustic wavefront of predetermined shape when the heaters or heater clusters are activated in a prescribed sequence by a controller, thereby constituting a phased-array pressure wave transmitting antenna that directs and modifies propagating energy by electrical control, but not necessarily by (gross) mechanical action. Such antennas are useful in aircraft, seagoing, and underwater vessels, as means of vernier steering, attitude control, low speed propulsion, and sonar.

A therger heater array is activated with steady currents, generally a lesser current than used for urging, while the magnitude of the current is measured by the controller. The current magnitude is related to the velocity with which fluid passes the heater. Once calibrated, each therger heater operates as a wideband "hotwire" anemometer. Heaters sized at the smaller range constitute anemometers sufficiently sensitive to detect the velocity partition of a passing acoustic disturbance. Again invoking the Huygens-Fresnel Principle, analysis of signals from the therger array allows characterization of the passing or impinging acoustic disturbance, thereby constituting an electrically aimed hydrophone.

Referring to figure 1, a variant of the therger heater further includes a heater support 22 composed of reciprocal electrodeformable material (connections to controller/analyzer omitted). Variant support 22 produces a signal related to the instantaneous magnitude of fluid pressure in cavity 16, providing the controller with closed loop heater control. Between thermal pulses, support 22 provides signals related to the gross pressure and pressure changes extant in fluid 14 (disregarding contributions from upstream or adjacent heaters), thereby ascertaining the instantaneous state of the assembly of object 6, fluid layer 14, and substrate 4. The preferred support 22 is composed of electrodeformable material of the hydrostatic pressure kind, a material that produces a signal related only to the magnitude of the pressure and not to the direction of the pressure.

The sensed pressure signal during a pressure pulse, the sensed pressure signal between pressure pulses, and the sensed anemometric signals of the heaters are conditioned, compared and combined in a prescribed manner by the controller to provide realtime diagnostic data related to the state of the host apparatus, and result in signals that allow the controller to electrically maintain apparatus operation within predetermined state boundaries. The self-sensing using electrodeformable insulators and heater anemometric response affords a degree of autonomy to the therger system without adding significant complexity, bulk, or manufacturing difficulty. Alternative embodiments - of the therger incorporate the controller and inputs for operating instructions onto the same substrate as the heaters.

The preferred method of making a therger is a combination of epitaxial deposition and erosive removal of selected materials on a suitable substrate. Therger manufacturing method variants also include the step of deposition of at least a portion of the substrate. The preferred embodiments of the present invention achieve high operating frequency and high efficiency when heaters are numerous and small. Therefore, micromachining methods are preferred. A favored method deposits an insulating layer, column electric buses, an insulating layer, row electric buses, temporary supports, heaters connecting row and column bus cross points, and finally, a body surface layer with heater cavities formed by masking. The completed deposition is then treated to remove the temporary heater support layer, and to connect row and column bus ends to a controller via a cable appropriate to the application.

High (or very low) temperature thergers will used a high (or very low) temperature connecting cable, and will include no components in the vicinity of the therger that are incompatible with temperature extremes. Moderate temperature thergers may include additional deposited sensing and control components on the same substrate as the heaters, such as electrodeformable insulating supports, thereby providing the known compactness and enhanced reliability of integral epitaxial constructions. Electrical sensing and control components compatible with high (or very low) temperature operation are most advantageously integrally incorporated on or in the therger substrate as well. Integral therger constructions, particularly those incorporating sense and control functions, provide autonomous electrical control of the force, balance, acoustical, chaotic initiator, and general state of key components of a host device, requiring only an input of electrical current. The electrical interface of the integral therger embodiment is thereby reduced to one, or at most two wires, thus constituting, for example, an "intelligent" bearing. The interface further includes at most two wires for operating instructions when the therger is embodied as an "intelligent" linear motor, rotary motor, or mechanical actuator.

Referring to figure 1, a therger variant is considered to be a deformable optical mirror, wherein optical membrane 6 is separated from therger substrate 4 by fluid film 14. Membrane 6 encloses gas 14 at a pressure reduced from the ambient pressure on the external membrane surface by the mean increment of pressure due to operation of heater array 10 for mirror embodiments that keep the membrane flat. A convex mirror embodiment maintains a pressure higher than ambient, and has substrate 4 curved to match the figure of the membrane. Activating heaters 8 of array 10 in a predetermined sequence develops a desired temporal and spatial distribution of forces on membrane 6, thereby deforming it into a prescribed figure.

The therger embodiment of the membrane mirror may further include optical transceivers such as 22, each transceiver comprising a light source and a light detector (not included in fig.). Light from the light sources is reflected from the proximate surface of membrane 6, detected by receivers, and processed by a controller to ascertain the state of reflecting membrane 6. The controller then compares this state with a desired state, and issues a sequence of heater activation signals.

Therger frequency response is more than sufficient to control the figure of a membrane mirror of any size up to and including the one kHz bandwidth needed to cancel optical perturbations of atmospheric turbulence. It is stressed that heater size is small compared to the minimum granularity of the membrane, that heater pulsing frequency is higher than the highest optical (temporal) frequency of interest, and that the membrane behaves as if driven by a spatial and temporal distribution of smoothly varying pressures that is in fact the envelope of a sequence of myriad short pressure pulses.

Although connections of Figs. 4-6 were described as providing independent electrical addressability of heaters, many therger applications provide the relative simplicity of cluster connection and activation. This is particularly apropos to applications wherein the - spatial periodicity of heaters far exceeds the granularity required of the urged object. For this class of embodiments, parallel cluster connection is preferred, particularly for operation in deleterious environments, because parallel connection ameliorates the adverse effects on the therger system due to failure of one or more members of the cluster. It is emphasized that a cluster of heaters connected in electrical parallel may spatially overlap one or more other similarly connected clusters, analogous to the overlapping of field windings of an electric motor. A useful embodiment of the therger covers a portion of the area of the substrate with many overlapping heater clusters so that a predetermined increment of pressure is generated in that area by a pseudorandom activation sequence. Each cluster then has more time to re-establish thermal equilibrium in preparation for the next pulse.

A Curie temperature is not an essential physical property for any material used to make thergers. Electrical resistivity (heater conductor), electrical conductivity (heater support insulators), and mechanical strength of materials determine the temperature range through which a particular therger will operate satisfactorily. Motors, actuators, aerosurfaces, and bearings made of thergers having selected materials will therefore operate satisfactorily throughout the range of near zero to 2000 K. At both the upper and lower ends of this range, the selection of materials that do not have a Curie temperatures is replete relative to the selection of those (magnetic and piezoelectric) that do.

High temperature therger operation proceeds in embodiments having a separate conductor from the heater or heater cluster to the controller, all pulses emanating from the controller (assumed cooled). An alternate embodiment provides raw electric power and activation instructions to a therger that integrally contains all components needed for heater pulsing, for example, pulse switches made of doped diamond transistors and the like. A variant of the high temperature therger uses received electric power and operating instructions in the form of light signals in a high temperature optical fiber, the control and distribution of power to heaters being controlled by light and light-activated switches, also integrally fabricated in the therger. Optical signal guides, for example, quartz fibers, provide the required activation signals when heated to 2000 K and above.

Many fluid devices attempt to remotely control the distribution of pressure by a multiplicity of remote fluid connections. Long connections temporally disperse the energy of a pressure pulse due to time delay distortion. Further, the speed of response of such devices is limited by the speed of sound in the fluid. In contrast, the therger brings action-initiating signals to the site of action at electrical speed. Although the response of the therger pulse is limited by the speed of sound in the fluid between the heater and the receptive object, this distance is generally in the range of a fraction of 1 µm to 100 µm, a distance known to contribute insignificant time delay of therger action with most fluids.

Although the present invention has been described with respect to specific embodiments thereof, various changes and modifications may be suggested to one skilled in the art. Therefore, it is intended that the present invention encompass such changes and modifications as fall within the scope of the appended claims.

## Claims

1. A thermally initiated pressure pulsing system comprising,
an array of cavities in a surface,
each cavity having a controllable source of thermal energy for producing pressure pulses in a medium.

2. A thermally initiated pressure pulsing system as in Claim 1 wherein,
a controller control the activation of each source of thermal energy.

3. A thermally initiated pressure pulsing system as in Claim 2 wherein,
the controllable source of thermal energy is an electrical heater, which preferably has electrical conductors attached, said conductors supported by an insulator base attached to a portion of the cavity.

4. A thermally initiated pressure pulsing system as in Claim 2 wherein,
there is a means of sensing pressure in the cavities, and whereby preferably there is a means of sending the pressure data from each cavity to the controller.

5. A thermally initiated pressure pulsing system as in Claim 2 wherein,
the controllable source of thermal energy is a heater in a cavity having a fuel source and an oxidizer source, said fuel and oxidizer exobarically reacting on the application of heat from the heater; whereby preferably a catalyst is present to increase the speed of the chemical reaction; or whereby preferably the chemical reaction is reversibly dissociative.

6. A thermally initiated pressure pulsing system as in Claim 2 wherein,
the medium comprises a fluid, preferably a gas or a liquid, or more preferably a liquid which nucleately boils, or a liquid which pulses to a gas and then condenses.

7. A thermally initiated pressure pulsing system as in Claim 6 wherein,
the heater has a microporous material for absorbing the fluid.

8. A thermally initiated pressure pulsing system as in Claim 2 wherein,
the cavities are pits having a circular cross section at the surface;
or wherein,
the cavities are trenches having a rectangular cross section at the surface.

9. A thermally initiated pressure pulsing system as in Claim 8 wherein,
a diaphragm covers the cavity, whereby preferably the diaphragm has an orifice;
or wherein
the cavity has a membrane attached which covers the cavity, said membrane acting as the heater.

10. A thermally initiated pressure pulsing system as in Claim 1 wherein,
the cavity is shaped to concentrate the pressure pulses away from the surface.

11. A thermally initiated pressure pulsing system as in Claim 2 wherein,
material proximate the surface is acted on by the pressure pulses from the cavities.

12. A thermally initiated pressure pulsing system as in Claim 9 or 11
wherein,
a fluid flows over the surface, and timed pressure pulses modify said fluid flow.

13. A thermally initiated pressure pulsing system as in Claim 12 wherein,
there is a means of measuring the flow rate of the fluid and sending said information to the controller.

14. A thermally initiated pressure pulsing system as in Claim 2 wherein,
the surface is curved and attached to the inside of a housing, a shaft proximate the surface receives pressure pulses from the cavities, said pressure pulses controlled by the controller to keep the shaft from contacting the surface; or to hypocycloidally roll the shaft.

15. A thermally initiated pressure pulsing system as in Claim 2 wherein,
the surface is curved and attached to the inside of a housing, a shaft having cavities with facets and rotatably supported proximate the surface receives pressure pulses from the surface cavities, said pressure pulses controlled by the controller to impinge the facets and rotate the shaft, whereby preferably the cavities have nozzles for directing the pressure pulses onto the facets.

16. A thermally initiated pressure pulsing system as in Claim 2 wherein,
the surface is flat, a sheet having cavities with facets proximate the surface receives pressure pulses from the surface cavities, said pressure pulses controlled by the controller to impinge the facets and move the sheet.

17. A thermally initiated pressure pulsing system as in Claim 2 wherein,
the surface is curved and attached to the inside of a housing, a shaft, having buckets, rotatably supported proximate the surface receives pressure pulses from the buckets, said pressure pulses controlled by the controller to impinge the buckets and rotate the shaft.

18. A thermally initiated pressure pulsing system as in one of Claims 14 to 17 wherein,
there is a means of measuring the position of the shaft or sheet and transmitting said position information to the controller.

19. A thermally initiated pressure pulsing system as in Claim 2 wherein,
the controller is programmed to send pressure pulses from the cavity array wherein the pressure pulses from the surface combine to comprise a phased array pressure wave transmitting antenna.

20. A thermally initiated pressure pulsing system as in Claim 2 wherein,
the heater in a cavity is operated as a hot wire anemometer, the current changes measured from the hot wire anemometer is transmitted to the controller, which is programmed to calculate the velocity of the medium.

21. A thermally initiated pressure pulsing system as in Claim 2 wherein,
the surface is curved forming a disc wherein the array of cavities is activated by the controller to form ultrasonic waves on the surface of the disc, then the activated disc is placed adjacent to a stationary surface, the medium being therebetween, whereby the wave crests on the disc surface rub against the stationary surface and move the disc or act on the medium which impinges the stationary surface and moves the disc; and whereby preferably the waves are ultrasonic. "

22. A thermally initiated pressure pulsing system as in Claim 2 wherein,
the medium acts on a membrane opposite the surface to adjust the shape of the membrane surface, whereby preferably the membrane is a deformable mirror.
